# EUROPÄISCHE PATENTANMELDUNG

(11) **EP 1 627 789 A2**
(43) Veröffentlichungstag der Anmeldung: **22.02.2006**
(21) Anmeldenummer: 05017370.7
(22) Anmeldetag: 10.08.2005
(51) Int. Cl.: B60S 3/06

(54) **Behandlungsverfahren und Behandlungseinrichtung für Fahrzeuge**

(30) Priorität: 18.08.2004 DE 202004012917 U
(71) Anmelder: Otto Christ AG, 87734 Benningen (DE)
(72) Erfinder: Christ, Markus, 87700 Memmingen (DE)
(74) Vertreter: Ernicke, Hans-Dieter

(57) **Zusammenfassung**

Die Erfindung betrifft ein Behandlungsverfahren und eine Autowaschanlage (1) mit ein oder mehreren Einrichtungskomponenten (6 bis 12), insbesondere Transporteinrichtungen, Behandlungsaggregaten und Betriebsmittelversorgungen, wobei die Fahrzeugauslastung der Autowaschanlage (1) mit einer Erfassungseinrichtung (4) ermittelt wird. Die Erfassungseinrichtung (4) ist mit einer Schalteinrichtung (5) verbunden, welche die Anlagenleistung an veränderliche Auslastungen automatisch anpasst.

## Beschreibung

Die Erfindung betrifft ein Behandlungsverfahren und eine Behandlungseinrichtung für Fahrzeuge, insbesondere eine Autowaschanlage, mit den Merkmalen im Oberbegriff des Verfahrens- und Vorrichtungshauptanspruchs.

Solche Waschanlagen sind aus der Praxis bekannt. Sie besitzen ein oder mehrere Einrichtungskomponenten. Bei einer Portalwaschanlage kann dies das Waschportal mit den darin angebrachten Behandlungsaggregaten, z.B. einer Waschbürste, einer Trockeneinrichtung, einer Auftragvorrichtung für verschiedene Flüssigkeiten oder dergleichen. Bei einer anderen Anlagenvariante in Form einer Autowaschstrasse können die angetriebenen Einrichtungskomponenten aus verschiedenen Behandlungsstationen und deren Aggregaten, z.B. einer Bürstenwaschstation, einer Trockenstation etc. bestehen. Außerdem ist bei Autowaschstrassen ein Fahrzeugförderer, z.B. eine Schleppkette, vorhanden. Die Autowaschanlagen sind in der Praxis auf einen bestimmten Fahrzeugdurchsatz und eine bestimmte Anlagenleistung ausgelegt. Hierauf sind auch die einzelnen Behandlungsprozesse, z.B. Wasch- und Trockenprozess etc., abgestimmt.

Es ist Aufgabe der vorliegenden Erfindung, eine bessere Behandlungstechnik aufzuzeigen.

Die Erfindung löst diese Aufgabe mit den Merkmalen im Verfahrens- und Vorrichtungshauptanspruch.
Die beanspruchte Behandlungseinrichtung und das Behandlungsverfahren sind flexibler als die vorbekannte Autowaschanlagentechnik und können sich an veränderliche Fahrzeugauslastungen automatisch und selbsttätig anpassen. Dies können tatsächlich eingetretene oder erwartete bzw. prognostizierte Auslastungsänderungen sein. Wenn ein größerer Fahrzeugdurchsatz oder ein größerer Andrang an wartenden Fahrzeugen herrscht oder erwartet wird, kann mit der Schalteinrichtung die Anlagenleistung erhöht werden.

Zur Leistungsanpassung können die steuerbaren Antriebe der verschiedenen Einrichtungskomponenten schneller oder langsamer laufen. Außerdem schaltet die Steuerung auf andere Prozesstakte oder Prozessgeschwindigkeiten um, so dass die Behandlungszeit pro Fahrzeug verkürzt wird. In der gleichen Zeitspanne können somit mehr Fahrzeuge behandelt und insbesondere gewaschen werden. Sinkt andererseits der Fahrzeugdurchsatz oder wird die wartende Fahrzeugzahl geringer, kann die Anlagenleistung wieder zurückgeschaltet werden. Hierbei kann zwischen optimaler Behandlungsqualität und optimalem Durchsatz gependelt werden.

Alternativ oder zusätzlich ist auch eine Änderung der Prozessinhalte, z.B. eine inhaltliche Verkürzung oder Verlängerung der Wasch-, Spül- oder Trockenvorgänge etc. und der dabei getätigten Fahrzeugüberfahrten möglich.

Durch die Leistungsanpassung lässt sich die Wartezeit der Waschkunden verkürzen. Auch kann eine Ressourcen- und insbesondere Energieoptimierung betrieben werden. Ferner ist es möglich, die Anlagenleistung in zwei oder mehr Stufen oder stufenlos zu verändern, um ein feinfühlige Anpassung zu bieten.

Für die automatische Leistungsanpassung der Behandlungseinrichtung ist eine Erfassungseinrichtung für die Fahrzeugauslastung vorgesehen, die auf verschiedene Weise ausgebildet sein kann. In den Unteransprüchen sind hierzu verschiedene Ausführungsbeispiele angegeben. In der einfachsten Form kann die Fahrzeugauslastung anlagenintern durch eine Zähleinrichtung in Verbindung mit einer Zeitaufnahme realisiert werden. Hierbei werden z.B. die zeitlichen Abstände zwischen den einzelnen Behandlungsprozessen gemessen. Dies sind die Wartezeiten zwischen einer Fahrzeugwäsche und der nächsten. Bei großem Andrang werden die Wartezeiten kürzer, worauf die Autowaschanlage mit einer Leistungserhöhung antwortet und sich automatisch anpasst. Umgekehrt wird bei einem Nachlassen des Andrangs die Anlagenleistung gesenkt. In anderen Ausgestaltungsvarianten kann alternativ oder zusätzlich die Zahl der vor der Behandlungseinrichtung wartenden Fahrzeuge erfasst und für die Leistungsanpassung heran gezogen werden. Außerdem kann über Indikatoren, z.B. eine Wetterkennung und/oder ein Zeit- und/oder Kalenderkennung, auf einen erfahrungsgemäß zu erwartenden Andrang geschlossen werden, wobei die Anlagenleistung vorsorglich angepasst wird. Die Fahrzeugbehandlungseinrichtung kann mehrere verschiedene Erfassungsmöglichkeiten haben. Hierbei können die vorgenannten Ausführungsvarianten beliebig untereinander kombiniert werden.

Die Fahrzeugbehandlungseinrichtung kann in beliebiger Weise ausgebildet sein. Es kann sich um Autowaschanlagen der genannten Art handeln. Neben den üblichen Anlagenformen Portalwaschanlage und Autowaschstrasse sind auch andere Varianten, wie Taktanlagen mit eigenständiger Fahrzeugbewegung zwischen Wasch- und Trockenbereich und dergleichen möglich. Anstelle oder ergänzend zu Autowaschanlagen sind auch Polieranlagen und beliebige andere Varianten möglich.

In den Unteransprüchen sind weitere vorteilhafte Ausgestaltungen der Erfindung angegeben.

Die Erfindung ist in den Zeichnungen beispielweise und schematisch dargestellt. Im einzelnen zeigen:
- Figur 1: eine Behandlungseinrichtung in Form einer Portalwaschanlage in Frontansicht mit einer Erfassungseinrichtung für die Fahrzeugauslastung und einer Schalteinrichtung zur automatischen Anpassung der Anlagenleistung,
- Figur 2: eine Variante der Portalwaschanlage von Figur 1 in Seitenansicht mit einer anderen Erfassungseinrichtung,
- Figur 3: eine weitere Variante einer Portalwaschanlage mit externer Fahrzeugerfassung und
- Figur 4: eine Autowaschanlage in Form einer Autowaschstrasse mit einer externen Erfassungseinrichtung.

In den Zeichnungen ist eine Behandlungseinrichtung (1) für Fahrzeuge (2), insbesondere Kraftfahrzeuge, in verschiedenen Ausführungsformen dargestellt. Die Behandlungseinrichtung (1) kann in beliebig geeigneter Weise ausgebildet sein. In den gezeigten Ausführungsbeispielen handelt es sich um eine Autowaschanlage. Alternativ oder zusätzlich ist eine Polieranlage möglich. Daneben sind beliebige andere Varianten von Behandlungs- und insbesondere Reinigungseinrichtungen für Fahrzeuge möglich.

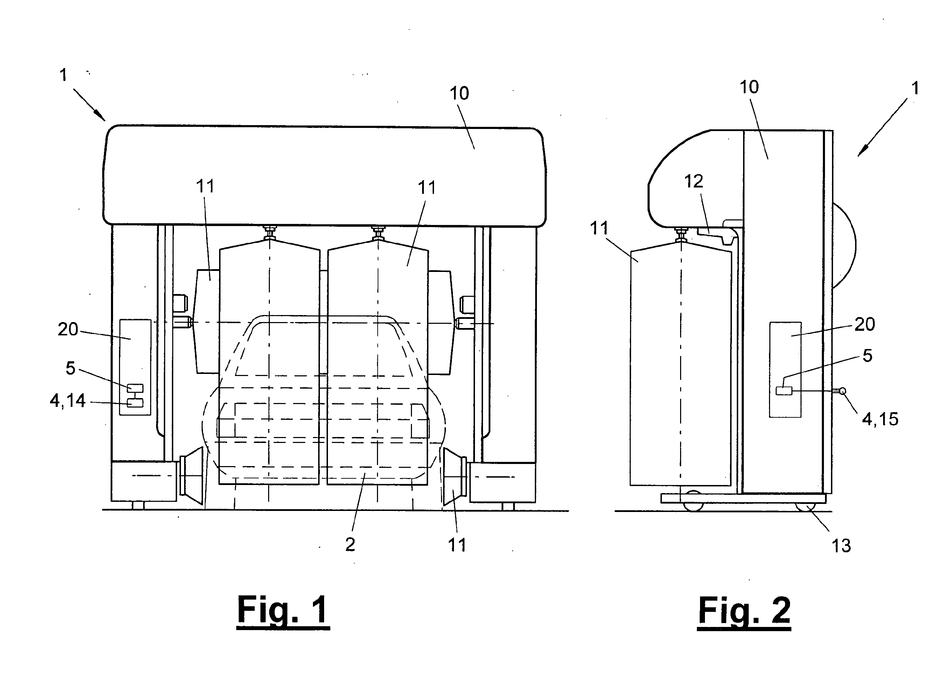

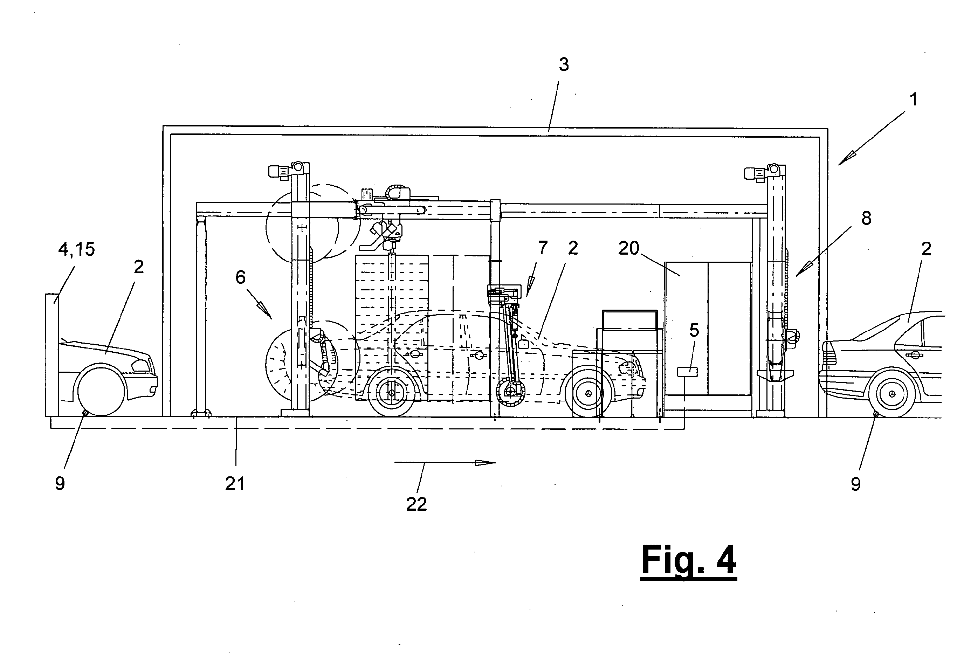

In Figur 1 bis 3 ist eine Portalwaschanlage und in Figur 4 eine Autowaschstrasse dargestellt. Nachfolgend wird auf diese Autowaschanlagen (1) im einzelnen Bezug genommen, wobei die beschriebenen technischen Sachverhalte in entsprechender Anpassung auch für Polieranlagen oder andere Behandlungseinrichtungen gelten.

Die gezeigten Autowaschanlagen (1) haben jeweils mindestens eine Erfassungseinrichtung (4) für die tatsächliche oder erwartete Fahrzeugauslastung der Anlage. In Abhängigkeit von der Fahrzeugauslastung kann die Leistung der Autowaschanlage (1) automatisch angepasst werden. Hierfür ist eine Schalteinrichtung (5) vorgesehen, welche vorzugsweise in die Steuerung (20) der Autowaschanlage (1) integriert ist und ggf. über eine Leitung mit der Erfassungseinrichtung (4) verbunden ist.

Für die Ausgestaltung der Erfassungseinrichtung(en) (4) gibt es verschiedene Ausführungsbeispiele. In Figur 1 ist die Erfassungseinrichtung (4) als Zähleinrichtung (14) für die Behandlungsprozesse pro Zeiteinheit ausgebildet. Dieser Zähler (14) ist z.B. in Verbindung mit einem geeigneten Zeitglied in der Anlagensteuerung (20) angeordnet und zählt die Behandlungsprozesse, insbesondere die Waschprozesse pro vorgegebener Zeiteinheit, z.B. pro Stunde. Alternativ kann die Zähleinrichtung (14) auch die Zeitabstände zwischen Ende des einen Behandlungsprozesses und Beginn des nächsten Behandlungsprozesses messen. Hierfür kann sie z.B. als Taktzähler ausgebildet sein. Je größer der Fahrzeugandrang ist, z.B. an Wochenenden, desto kürzer werden die Zeitabstände zwischen den Behandlungsprozessen bzw. desto mehr Fahrzeugwäschen finden pro Zeiteinheit statt. Ein nachlassender Fahrzeugandrang äußert sich in verlängerten Zeitabständen.

Mit der Zähleinrichtung (14) kann ein kompletter Behandlungsprozess mit allen Prozessschritten, z.B. Vorwäsche, Hauptwäsche, Konservierung, Trocknung etc. von Anfang bis Ende erfasst werden. Alternativ können einzelne Prozessschritte, z.B. die Zahl der Hauptwäschen pro Zeiteinheit, erfasst werden.

Figur 2 zeigt in der Seitenansicht eine technische Variante der Erfassungseinrichtung (4) die hier als Zähleinrichtung (15) für den Fahrzeugdurchsatz ausgebildet ist. Hierbei kann es sich z.B. um einen Bewegungsmelder, eine Lichtschranke, einen mechanischen Fühler oder dergleichen handeln, der von den ein- und ausfahrenden Fahrzeugen bei stehendem Waschportal (10) betätigt wird. Hier kann wiederum über die Zeitdauer zwischen den Mess- oder Zählerimpulsen der Fahrzeugdurchsatz gemessen werden.

In den beiden Ausführungsbeispielen von Figur 1 und 2 findet eine interne Erfassung statt, die außerdem auf den tatsächlich vorhandenen Fahrzeugdurchsatz bezogen ist.

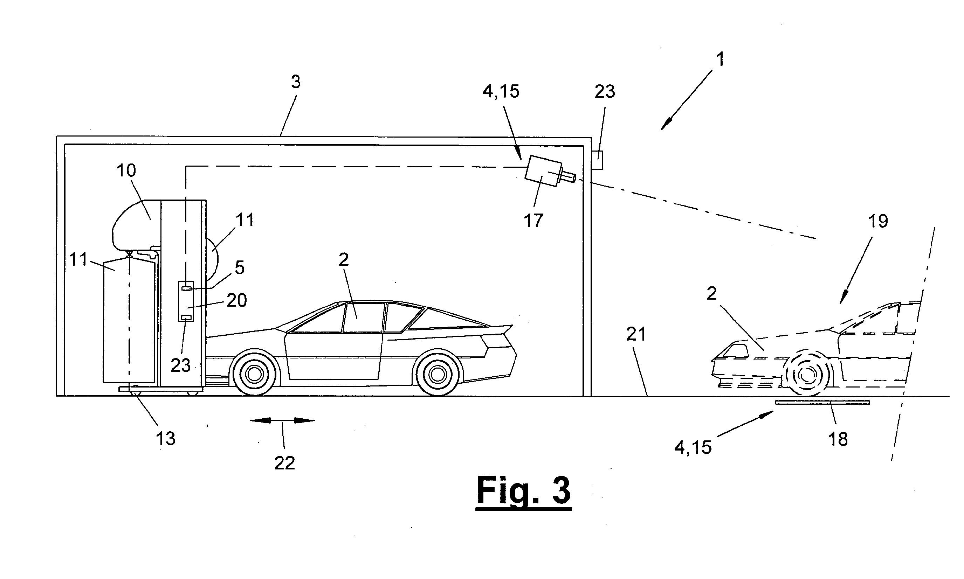

Figur 3 zeigt andere Technik für eine externe Erfassung des tatsächlichen und des erwarteten Fahrzeugdurchsatzes.

In der einen Variante ist eine Messeinrichtung (16) vorgesehen, welche die Zahl der vor der Autowaschanlage (1) in einem Wartebereich (19) wartenden Fahrzeuge (2) misst. Es kann die Gesamtzahl der Fahrzeuge oder die Fahrzeugzahl in einem bestimmten überwachten Bereich erfasst werden. Hierdurch wird der Fahrzeugandrang vor der Autowaschanlage (1) gemessen.

Figur 3 zeigt zwei verschiedene Bauvarianten. In der einen Variante ist die Messeinrichtung (16) als Kamerasystem (17) mit einer Bildauswertung ausgebildet und über eine Leitung mit der Schalteinrichtung (5) verbunden. Das Kamerasystem (17) kann an einer beliebig geeigneten Stelle angebracht sein. Es kann sich z.B. am Eingang der Waschhalle (3) befinden. Es kann alternativ auch am Waschportal (10) montiert sein. Bevorzugt befindet es sich in einem geschützten und gegebenenfalls auch abschließbaren Bereich an oder in der Autowaschanlage (1).

Die zweite Variante von Figur 3 betrifft eine extern und vor der Autowaschanlage (1) angeordnete Messeinrichtung (16). Diese kann z.B. mehrere im Fahrzeugwartebereich (19) angeordnete Messelemente (18) aufweisen, die mechanisch oder berührungslos das Vorhandensein von Fahrzeugen abtasten. Dies können z.B. die in Figur 3 gezeigten Induktionsschleifen im Boden (21) sein. Alternativ sind Lichtschranken, mechanische Taster oder dergleichen möglich. Auch hier ist die Messeinrichtung (16) in einer nicht dargestellten Weise mit der Schalteinrichtung (5) verbunden.

Figur 3 zeigt auch in mehreren Abwandlungen eine Erfassungseinrichtung (4) für den erwarteten oder prognostizierten Fahrzeugdurchsatz, der mittelbar durch ein oder mehrere Indikatoren (23) erfasst wird. Ein Indikator (23) ist z.B. ein an der Autowaschanlage (1) oder an anderer Stelle angebrachter Wettermelder, wie er in Figur 3 am Halleneingang dargestellt ist. Dies kann z.B. ein Regensensor, ein Helligkeitssensor, ein Temperaturfühler oder dgl. sein. Aus den Wetterdaten kann auf einen voraussichtlichen Fahrzeugandrang geschlossen werden, weil z.B. erfahrungsgemäß bei Schönwetter mehr Kunden zum Autowaschen kommen, als bei Regenwetter.

Ein Indikator (23) kann andererseits ein in die Steuerung (20) integriertes oder zugeordnetes Zeit- und/oder Kalenderglied in Verbindung mit einer Datenbank bzw. einem Speichermodul sein. Wenn nach der Erfahrung an bestimmten Wochentagen und/oder Tagesstunden ein erhöhter Andrang herrscht, z.B. Freitag und Samstag in den Nachmittagsstunden, kann dies im Indikator (23) gespeichert sein und für die Leistungssteuerung und Leistungserhöhung herangezogen werden. Umgekehrt können erfahrungsgemäß andrangschwache Zeiten für eine Leistungssenkung sorgen. Zudem kann eine Kalenderkennung für Jahreszeiten, Feiertage, Ferienzeiten etc. vorhanden sein.

Die Erfassungseinrichtung (4), insbesondere eine Kombination der verschiedenen Ausführungsvarianten, kann selbstlernend sein. Hierbei können die prognostizierten und die tatsächlich eingetretenen Fahrzeugzahlen gespeichert und verglichen werden, wobei anhand des Vergleichs die ereignisbezogene, gespeicherte Prognose und evtl. andere ähnliche Prognosen für zukünftige Anwendungen modifiziert werden.

In der Variante von Figur 4 ist eine Autowaschstrasse dargestellt, die mehrere relativ ortsfeste Behandlungsstationen (6,7,8), z.B. für Bürstenwäsche, Radwäsche und Trocknung aufweist, wobei die Fahrzeuge (2) mit einem geeigneten Fahrzeugförderer (9), z.B. einer Schleppkette, in Fahrtrichtung (22) durch die Autowaschanlage (1) bewegt werden. Bei dieser Autowaschstrasse ist die Erfassungseinrichtung (4) als externe Zähleinrichtung (15) für die Ermittlung des Fahrzeugdurchsatzes ausgebildet. Hierbei handelt es sich z.B. um eine Lichtschrankenanordnung, die am oder vor dem Eingang der Autowaschstrasse angeordnet ist.

Die Schalteinrichtung (5) kann in beliebig geeigneter Weise konstruktiv ausgebildet sein und ist vorzugsweise in die Steuerung (20) integriert. Hierbei kann es sich um ein konstruktives Steuer- oder Schaltelement handeln. Alternativ ist auch eine softwaremäßige Integration in die Anlagensteuerung möglich. Durch die Schalteinrichtung (5) werden die Signale der Erfassungseinrichtung (4) über die Fahrzeugauslastung aufgenommen, verarbeitet bzw. ausgewertet und in Steuersignale für eine Anpassung und Änderung der Anlagenleistung umgesetzt. Diese Leistungsanpassung kann in zwei oder mehr Stufen oder stufenlos geschehen. Im einfachsten Fall gibt es zwei Schaltzustände für niedrige und hohe Anlagenleistung.

Eine Erhöhung der Anlagenleistung kann bedeuten, dass die Waschprozesse schneller ablaufen. Dies wird durch eine Steigerung der Geschwindigkeiten der verschiedenen Komponenten (6 bis 12) der Autowaschanlage (1) erreicht. Die Komponenten (6 bis 12) haben hierfür steuerbare und gegebenenfalls auch regelbare Antriebe (im einzelnen nicht dargestellt). Zum Beispiel hat das in Figur 1 bis 3 dargestellte und in Fahrtrichtung (22) vorwärts und rückwärts fahrbare Waschportal (10) ein Fahrwerk (13) mit einem steuerbaren, z.B. elektrischen Antrieb. Dessen Geschwindigkeit kann in Stufen oder stufenlos von der Schalteinrichtung (5) bzw. der Steuerung (20) zur Leistungsanpassung erhöht oder gesenkt werden.

In entsprechender Weise werden auch die anderen Antriebe der im Waschportal (10) befindlichen Behandlungsaggregate (11,12), z.B. der Waschbürsten und der Trockeneinrichtung, beaufschlagt. Dies betrifft insbesondere die Dreh-, Hub- und Fahrantriebe für die Bewegung der Waschbürsten (11) und der Trocknungsdüsen (12) im Waschportal (10). Darüber hinaus werden auch die Antriebe für die Betriebsmittelversorgungen beaufschlagt und in der Geschwindigkeit und/oder Leistung angepasst. Dies können z.B. die Pumpen einer Auftragsvorrichtung für Hochdruck-Waschwasser, flüssige Reinigungsmittel, Reinigungsschaum, Spülmittel, Konservierungsmittel, Wachse oder dergleichen sein. Je nach Prozesserfordernis wird gegebenenfalls der Förderdruck für die Betriebsmittel zur Leistungsanpassung erhöht oder gesenkt.

Ferner können innerhalb der Steuerung (20) auch die vorgegebenen Behandlungsprogramme, insbesondere Waschprogramme, verändert werden. Dies kann eine Umschältung zwischen verschiedenen gespeicherten Waschprogrammen sein. Alternativ kann auch eine stufenlose Veränderung innerhalb eines Behandlungsprogramms durch Anpassung der Prozesszeiten im Rahmen einer Ablaufsteuerung erfolgen.

In einer weiteren Abwandlung ist es möglich, Behandlungsprozesse, insbesondere Waschprozesse, durch Weglassen einzelner Stufen zu verkürzen. Zur Erhöhung der Anlagenleistung wird z.B. in einer Portalwaschanlage das stehende Fahrzeug (2) auf dem Hinweg des Portals (10) ein Mal gewaschen und auf dem Rückweg ein Mal gespült. Bei geringerem Fahrzeugandrang und gesenkter Leistung steht mehr Zeit zur Verfügung, so dass die Fahrzeugwäsche doppelt mit einem Vor- und einem anschließenden Rückhub des Waschportals (10) durchgeführt wird und erst anschließend im neuerlichen Vorhub die Spülung statt findet. Zu diesen Zwecken empfiehlt es sich, entsprechend der Leistungsanpassung vorprogrammierte Waschprogramme mit unterschiedlichen Prozessinhalten und Prozessschritten vorzusehen und diese zum Zwecke der Leistungsanpassung umzuschalten.

Bei der in Figur 4 gezeigten Autowaschstrasse geschieht ähnliches bei der Leistungsanpassung. Hier kann z.B. die Fördergeschwindigkeit der Schleppkette (9) bzw. von deren Antrieb zur Leistungsanpassung verändert und bei höherem Fahrzeugandrang gesteigert werden. Entsprechend der höheren Schleppgeschwindigkeit wird auch ähnlich wie bei der Portalwaschanlage die Geschwindigkeit der Behandlungsaggregate, z.B. der Waschbürsten und Trockner entsprechend über deren Antriebe angepasst. Soweit die Behandlungsaggregate an mitfahrenden Portalen angebracht sind, wird auch deren Mitfahr- und Rückholbewegung an die geänderte Schleppgeschwindigkeit angepasst. Auch für die Betriebsmittelversorgung gilt entsprechendes.

Bei einer Autowaschstrasse kommt ggf. eine zeitliche Verkürzung der Waschprozesse durch Weglassen oder Verkürzen von Prozessschritten weniger in Betracht, weshalb hier üblicherweise die erhöhte Schleppgeschwindigkeit und die Behandlungsgeschwindigkeiten der verschiedenen Aggregate maßgeblich sind.

Bei der nicht dargestellten Variante einer Taktanlage gibt es zwei oder mehr örtlich voneinander getrennte Prozessbereiche, z.B. einen Wasch- und einen Trockenbereich. Während der Prozesse steht das Fahrzeug in diesen Bereichen und wird beim Prozesswechsel vom Fahrzeuglenker durch Eigenantrieb in den nächsten Bereich gefahren. Bei einer Taktanlage sind wieder alle Anpassungsmöglichkeiten mit Beschleunigung der Antriebe und Veränderungen, insbesondere Verkürzungen, der Prozessabschnitte möglich.

Abwandlungen der gezeigten Ausführungsformen sind in verschiedener Weise möglich. Zum einen kann die Erfassungseinrichtung (4) in beliebig anderer Weise ausgebildet sein. Zudem kann die Schalteinrichtung (5) als separate Einrichtung entfallen und als Softwaremodul in die Anlagensteuerung (20) integriert sein. Ferner ist es möglich, die Behandlungseinrichtung (1) in beliebig anderer Weise auszubilden. Hierbei ist es außerdem möglich, mehrere Behandlungseinrichtungen (1) mit einer gemeinsamen Erfassungseinrichtung (4) zu betreiben. Zudem ist es möglich, eine Erfassungseinrichtung (4) mehrteilig auszubilden und mehrere Zähleinrichtungen oder Messelemente parallel zu betreiben. Schließlich können die Fahrzeuge (2) von beliebiger Ausbildung sein. Die beschriebenen Ausführungsbeispiele gelten in entsprechender Anpassung auch für Lkw-Waschanlagen. Außerdem ist es möglich, reine Hochdruck-Waschanlagen ohne Waschbürsten oder mit verminderter Bürstenbestückung vorzusehen.

### BEZUGSZEICHENLISTE

- 1: Behandlungseinrichtung, Autowaschanlage
- 2: Fahrzeug
- 3: Halle
- 4: Erfassungseinrichtung
- 5: Schalteinrichtung
- 6: Komponente, Behandlungsstation, Bürstenwäsche
- 7: Komponente, Behandlungsstation, Radwäsche
- 8: Komponente, Behandlungsstation, Trocknung
- 9: Komponente, Fahrzeugförderer, Schleppkette
- 10: Komponente, Waschportal
- 11: Komponente, Behandlungsaggregat, Waschbürste
- 12: Komponente, Behandlungsaggregat, Trockner
- 13: Fahrwerk
- 14: Zähleinrichtung für Prozesse
- 15: Zähleinrichtung für Fahrzeuge
- 16: Messeinrichtung
- 17: Kamerasystem
- 18: Messelement
- 19: Fahrzeugwartebereich
- 20: Steuerung
- 21: Boden
- 22: Fahrtrichtung
- 23: Indikator

## Patentansprüche

1. Verfahren zum Behandeln von Fahrzeugen (2) in einer Behandlungseinrichtung (1), insbesondere einer Autowaschanlage, mit ein oder mehreren angetriebenen Einrichtungskomponenten (6 bis 12), insbesondere Transporteinrichtungen, Behandlungsaggregaten und Betriebsmittelversorgungen, **dadurch**
**gekennzeichnet, dass** die Fahrzeugauslastung der Behandlungseinrichtung (1) mit einer Erfassungseinrichtung (4) ermittelt, und dass mittels einer damit verbundenen Schalteinrichtung (5) die Anlagenleistung an veränderliche Auslastungen automatisch angepasst wird.

2. Verfahren nach Anspruch 1, **dadurch**
**gekennzeichnet, dass** in der Behandlungseinrichtung (1) die Zahl der Behandlungsprozesse pro Zeiteinheit und/oder die Zeitabstände zwischen Ende und Beginn aufeinander folgender Behandlungsprozesse gemessen und für die Anpassung der Anlagenleistung ausgewertet werden.

3. Verfahren nach Anspruch 1 oder 2, **dadurch**
**gekennzeichnet, dass** zur Anpassung der Anlagenleistung die Antriebsgeschwindigkeiten und/oder die Leistung der Komponenten (6 bis 12) und der Betriebsmittelversorgungen der Behandlungseinrichtung (1) erhöht oder gesenkt werden.

4. Verfahren nach Anspruch 1, 2 oder 3, **dadurch**
**gekennzeichnet, dass** zur Anpassung der Anlagenleistung die Behandlungsprogramme in einer Steuerung (20) der Behandlungseinrichtung (1) umgeschaltet werden.

5. Behandlungseinrichtung für Fahrzeuge (2), insbesondere Autowaschanlage, mit ein oder mehreren angetriebenen Einrichtungskomponenten (6 bis 12), insbesondere Transporteinrichtungen, Behandlungsaggregaten und Betriebsmittelversorgungen, **dadurch**
**gekennzeichnet, dass** die Behandlungseinrichtung (1) eine Erfassungseinrichtung (4) für die Fahrzeugauslastung und eine damit verbundene Schalteinrichtung (5) zur automatischen Anpassung der Anlagenleistung an veränderliche Auslastungen aufweist.

6. Behandlungseinrichtung nach Anspruch 5, **dadurch**
**gekennzeichnet, dass** die Erfassungseinrichtung (4) als Zähleinrichtung (14) für die Behandlungsprozesse pro Zeiteinheit und/oder als Zähleinrichtung (15) für den Fahrzeugdurchsatz ausgebildet ist.

7. Behandlungseinrichtung nach Anspruch 5, **dadurch**
**gekennzeichnet, dass** die Erfassungseinrichtung (4) als Messeinrichtung (16) zur Erfassung der wartenden Fahrzeugzahl ausgebildet ist.

8. Behandlungseinrichtung nach Anspruch 5, **dadurch**
**gekennzeichnet, dass** die Erfassungseinrichtung (4) als Indikator (23) für erwartete oder prognostizierte Fahrzeugzahlen ausgebildet ist.

9. Behandlungseinrichtung nach Anspruch 8, **dadurch**
**gekennzeichnet, dass** der Indikator (23) als Wettermelder und/oder als Zeit- und/oder Kalenderglied ausgebildet ist.

10. Behandlungseinrichtung nach einem der vorhergehenden Ansprüche, **dadurch gekennzeichnet, dass** die Erfassungseinrichtung (4) in die Steuerung (20) der Behandlungseinrichtung (1) integriert ist.

11. Behandlungseinrichtung nach einem der vorhergehenden Ansprüche, **dadurch gekennzeichnet, dass** die Schalteinrichtung (5) in die Steuerung (20) der Behandlungseinrichtung (1) integriert ist

12. Behandlungseinrichtung nach einem der vorhergehenden Ansprüche, **dadurch gekennzeichnet, dass** die Einrichtungskomponenten (6 bis 12) steuerbare Antriebe aufweisen.

13. Behandlungseinrichtung nach einem der vorhergehenden Ansprüche, **dadurch gekennzeichnet, dass** die Behandlungseinrichtung (1) als Portalwaschanlage ausgebildet ist, wobei die Antriebe des ein- oder mehrfach vorhandenen Portals (10) und der darin angeordneten Behandlungsaggregate (11,12) mit der Schalteinrichtung (5) verbunden sind.

14. Behandlungseinrichtung nach einem der Ansprüche 5 bis 12, **dadurch gekennzeichnet, dass** die Behandlungseinrichtung (1) als Autowaschstrasse ausgebildet ist, wobei die Antriebe der Behandlungsstationen (6,7,8) und eines Fahrzeugförderers (9) mit der Schalteinrichtung (5) verbunden sind.
